# EUROPÄISCHE PATENTSCHRIFT

(11) **EP 3 502 614 B1**
(45) Veröffentlichungstag und Bekanntmachung des Hinweises auf die Patenterteilung: **30.06.2021**
(21) Anmeldenummer: 18213005.4
(22) Anmeldetag: 17.12.2018
(51) Int. Cl.: G01B 11/25, G01B 11/245

(54) **OPTISCHE MESSEINRICHTUNG**
OPTICAL MEASURING DEVICE
DISPOSITIF DE MESURE OPTIQUE

(30) Priorität: 21.12.2017 DE 102017130909
(43) Veröffentlichungstag der Anmeldung: 26.06.2019
(60) Teilanmeldung: 21162603.1
(73) Patentinhaber: Weber Maschinenbau GmbH Breidenbach, 35236 Breidenbach (DE)
(72) Erfinder: Köster, Bernd, 38162 Cremlingen (DE)
(74) Vertreter: Gramm, Lins & Partner Patent- und Rechtsanwälte PartGmbB

(56) Entgegenhaltungen:
- DE-A1-102010 011 217
- DE-A1-102011 104 550
- DE-A1-102013 112 260
- DE-A1-102015 103 373
- DE-T2- 69 628 956
- US-B2- 9 301 626

## Beschreibung

Die Erfindung betrifft eine optische Messeinrichtung zur Ermittlung von Eigenschaften eines Objektes mit:
- einer ersten Beleuchtungseinheit, die zur Projektion einer linienförmigen Markierung auf einer Beleuchtungsebene ausgebildet ist, und
- einer ersten Bildaufnahmeeinheit zur Erfassung der auf das Objekt projizierten linienförmigen Markierung.

Zur Ermittlung von Objekteigenschaften ist das sogenannte Lichtschnittverfahren bekannt, bei dem z.B. mit einem Laser oder einer Linienbeleuchtung eine Lichtlinie auf die Oberfläche des zu analysierenden Objektes projiziert und das seitliche Bild mit einer Bildaufnahmeeinheit aufgenommen wird. Aus der Form der aktuellen Profillinie kann dann mittels einer entsprechenden Kalibrierung unmittelbar auf die Objekthöhe eines Profilpunktes im aktuellen Schnittbild geschlossen werden.

Wenn sich nun der Objektkörper mit räumlich und zeitlich bekanntem Vorschub unter der Lichtlinie entlang bewegt, kann eine Abfolge von Querschnittsprofilen gewonnen werden, aus denen die zum Bildaufnahmesensor gewandte Oberfläche des Objektkörpers rekonstruiert werden kann. Auf diese Weise kann das Querschnittsprofil von Objekten, die z.B. auf einem Transportband gefördert werden, effizient beim Durchlaufen durch den Lichtvorhang erfasst werden. Bei der bekannten Transportgeschwindigkeit und Aufnahmegeschwindigkeit kann hieraus ein Oberflächenprofil der Objekte erstellt werden. Die Bildaufnahme kann optional auch durch Inkrementalgeberimpulse getriggert werden. Hierdurch werden die Abstände zwischen den Aufnahmen bekannt.

DE 696 28 956 T2 offenbart eine optische Messeinrichtung, bei der ein Streifengenerator zur Projektion einer linienförmigen Markierung mit einer Bildaufnahmeeinheit sowie eine zweite Beleuchtungseinheit mit einer weitere Bildaufnahmeeinheit vorgesehen ist.

DE 10 2011 104 550 A1 offenbart eine optische Messvorrichtung, bei der eine Beleuchtungsvorrichtung für eine Flächenbeleuchtung und eine Lichtquelle für einen Lichtfächer vorhanden ist.

DE 10 2013 112 260 A1 zeigt ein Verfahren zum Erkennen von Fehlstellen bei Faserhalbzeuge. Dabei wird mit Hilfe eines optischen Lichtprojektionsverfahrens ein Höhenprofil ermittelt, wobei eine Intensitätsverteilung durch zusätzliche Beleuchtung erfasst wird.

DE 10 2010 011 217 A1 offenbart ein Verfahren zur Messung einer Profilgeometrie von sphärisch gekrümmten Oberflächen. Dabei wird die Geometrie aus unterschiedlichen Winkel linienförmig beleuchtet du die reflektierte Strahlung mit einer Flächenkamera gemessen.

DE 10 2015 103 373 A1 offenbart ein Koordinatenmessgerät mit einem taktilen Messkopf und einem optische Emitter, wobei der Messkopf und der optische Emitter in einer räumlichen Relation relativ zueinander fest angeordnet sind.

Aufgabe der vorliegenden Erfindung ist es, eine verbesserte optische Messeinrichtung zu schaffen, die möglichst kompakt und sicher ist.

Die Aufgabe wird durch die optische Messeinrichtung mit den Merkmalen des Anspruchs 1 gelöst. Vorteilhafte Ausführungsformen sind in den Unteransprüchen beschrieben.

Die erste Beleuchtungseinheit enthält mehrere Lichtquellen, die auf die Beleuchtungsebene so ausgerichtet sind, dass Lichtstrahlen der mehreren Lichtquellen gebündelt auf gemeinsamen Zielpunkten der Beleuchtungsebene zusammenfallen. Die Lichtlinie wird somit durch mehrere Lichtquellen erzeugt und hat damit eine entsprechend größere Helligkeit als bei einer Nutzung von nur einer Lichtquelle mit gleicher Strahlungsleistung.

Durch die Nutzung von mehreren Laserlichtquellen kann Laserstrahlung mit geringer Intensität genutzt werden, so dass die Gefährdung der Umgebung verringert wird. So können Laser geringer Schutzklassen eingesetzt werden, um dennoch eine Lichtlinie mit ausreichender Helligkeit zu erzeugen als bei Verwendung von nur einer Laserlichtquelle. Dies reduziert den Schutz- und Absicherungsaufwand erheblich. Gleichzeitig entsteht weniger Baugröße, Bauteileaufwand sowie damit auch eine einfachere Bedienung und Reinigung.

Im Strahlengang zwischen Lichtquellen der ersten Beleuchtungseinheit und einer Beleuchtungsebene kann eine Schlitzblende, ein Prisma, eine Linsenoptik und/oder eine Schattenkante zur Bildung einer Linie als Markierung angeordnet sein. Auf diese Weise kann die für das Lichtschnittverfahren notwendige Lichtlinie auf einfache Weise erzeugt werden.

Anstelle von Laserlichtquellen kann auch eine lineare Anordnung von nicht kohärent abstrahlenden Leuchtdioden verwendet werden. Dies hat den Vorteil, dass keine Speckle-Effekte auftreten.

Mit einer in den Strahlengang gesetzten Schlitzblende und/oder mit Prismen oder Linsen, die zusätzlich oder statt einer Schlitzblende verwendet werden, lassen sich ohne signifikante Streuverluste Lichtlinien erzeugen, wobei die Gefahr für die Umgebung reduziert wird.

Ein Problem besteht oftmals darin, die optische Messeinrichtung ohne Abschirmung gegen Fremdlicht einerseits und mit selbst emittiertem Licht andererseits einzusetzen. Dabei soll die optische Messeinrichtung möglichst ohne besondere Schutzvorkehrungen, z.B. vor einem zu nahem Kontakt mit dem Menschen und der damit einhergehenden Gefährdung der Augen durch zu große Lichtstrahlung, eingesetzt werden. Die Laserlichtlinie muss daher immer noch für das Lichtschnittverfahren ausreichend hell sein. Die bei solchen Systemen in der Regel verwendeten Laserlichtquellen sind für die erforderliche Messsicherheit so stark, dass eine Augengefährdung beim Blick in den Messlaser besteht. Daher gelten in der Regel die Schutzklassen 1M oder 2M als tolerabel. Um die notwendige Intensität bereitzustellen, liegen die Schutzklassen aufgrund der üblichen Bauform von Linienlasern oft bei 3R oder sogar noch höher, was eine ungeschützte Verwendung ausschließt.

Zur Lösung dieses Problems wird vorgeschlagen, dass die erste Beleuchtungseinheit der optischen Messeinrichtung mehrere Lichtquellen hat, die auf die Beleuchtungsebene so ausgerichtet sind, dass Lichtstrahlen der mehreren Lichtquellen gebündelt auf gemeinsame Zielpunkte der Beleuchtungsebene zusammenfallen.

Damit lassen sich Lichtquellen einer reduzierten Schutzklasse einsetzen, da eine Gefahr für die Umgebung nicht in dem Zielpunkt besteht, sondern nur beim Blick in eine einzelne Lichtquelle. Die für den Laserschnitt benötigte Lichtleistung wird durch mehrere, d.h. drei, vier oder mehr Lichtquellen bereitgestellt, die jeweils in einem gemeinsamen Zielpunkt zusammengeführt werden. Dieser Zielpunkt ist der zur Projektion der Lichtlinie vorgesehene Projektionspunkt auf der Beleuchtungsebene, d.h. auf dem zu analysierenden Objektpunkt.

Dabei wird ausgenutzt, dass für die Bewertung der Laserschutzklasse die Bewertung der Augengefährdung ausschlaggebend ist. Diese wiederum wird von der Größe des Bildes der scheinbaren Lichtquelle auf der Netzhaut wesentlich beeinflusst. Ein kleineres Bild an der Quelle gleicher Intensität bedeutet auf der Netzhaut eine größere Gefährdung, als ein größeres Bild, das dieselbe Intensität auf der größeren Netzhautfläche verteilt. Somit kann durch gezieltes Vergrößern der Bilder auf der Netzhaut die Gefährdung abgesenkt werden. Dies wird erreicht, indem die Lichtstrahlen mehrerer Lichtquellen reduzierter Lichtintensität im Zielpunkt zusammengeführt werden und dadurch im Zielpunkt die notwendige hohe Intensität aufweisen. Nicht aber beim Blick in die Laserlichtquellen.

Die erste Beleuchtungseinheit kann mehrere Laserlichtquellen haben, deren Laserlichtstrahlen in der Beleuchtungsebene zusammengeführt sind. Die Nutzung von Laserlicht zur Projektion der Lichtlinie für das Lichtschnittverfahren hat den Vorteil, dass der Laser die Laserlichtstrahlen stark bündelt und diese daher gut auf einen Zielpunkt ausgerichtet werden können. Sie haben zudem eine hohe Lichtleistung und sind gut steuerbar.

Denkbar ist aber auch die Nutzung von Lichtquellen, die nicht koherentes Licht abstrahlen.

Durch die erfindungsgemäße Anwendung des Lichtschnittverfahrens ergibt sich der Vorteil, dass man damit auch in hohe Geschwindigkeitsbereiche bei der Profildichte vorstößt. Zum Beispiel ist eine einfache, schnelle 3D-Auswertung möglich; mit 1.000 Hz und mehr.

Es entstehen keine Probleme, wenn das Objekt - wie üblicherweise Lebensmittel - nicht hinreichend strukturiert ist. Somit ist die erfindungsgemäße Auswertung besser geeignet bei den Materialeigenschaften von Lebensmitteln als der Einsatz von Stereo- oder TOF-Kamerasystemen. Denn bei diesen beiden Systemen sind Entfernungsmessungen z.B. bei Fett und Fleisch im Ergebnis sehr unterschiedlich; insbesondere wegen der unterschiedlichen Eindringtiefe von Licht.

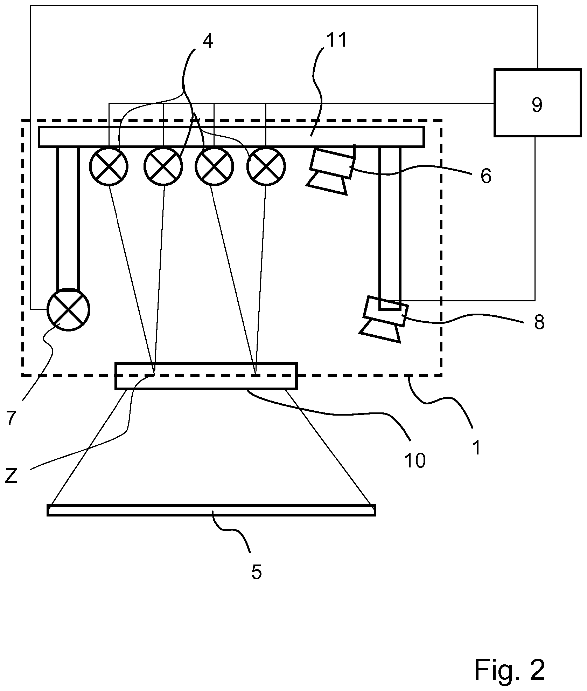

Die Erfindung wird nachfolgend den beigefügten Zeichnungen näher erläutert, wobei nur Figur 2 ein erfindungsgemäßes Ausführungsbeispiel zeigt. Es zeigen:
Figur 1 - Skizze einer optischen Messeinrichtung, die auf ein Transportband für Lebensmittelobjekte ausgerichtet ist;
Figur 2 - Skizze der optischen Messeinrichtung aus Figur 1.

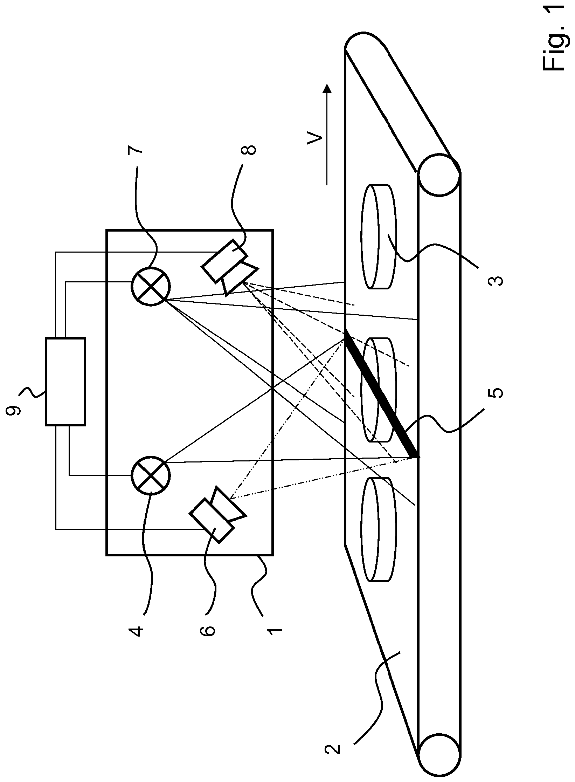

Figur 1 zeigt eine perspektivische Skizze einer optischen Messeinrichtung 1, die auf ein Transportband 2 ausgerichtet ist. Das Transportband 2 trägt Objekte 3, wie beispielsweise Wurst-, Fleisch- oder Käsescheiben, die in eine Vorschubrichtung V transportiert werden.

Die optische Messeinrichtung 1 hat eine erste Beleuchtungseinheit 4 mit mindestens einem Leuchtmittel. Die erste Beleuchtungseinheit 4 ist zur Projektion einer linienförmigen Markierung 5 auf einer Beleuchtungsebene ausgebildet. Die Beleuchtungsebene kann die Oberseite bzw. Oberfläche des Transportbandes 2 sein, auf der die Objekte 3 getragen werden. Denkbar ist aber auch, dass die Beleuchtungsebene durch die Oberseite der von dem Transportband 2 getragenen Objekte 3 definiert wird oder durch eine andere geeignete Ebene.

Die Objekte 3 werden nun in Vorschubrichtung V unter den Strahlengang der ersten Beleuchtungseinheit 4 hindurch transportiert, so dass die linienförmige Markierung 5 auf das Objekt 3 projiziert wird. Durch die dreidimensionale Kontur des Objektes 3 verformt sich die linienförmige Markierung 5, so dass im bekannten Linienschnittverfahren das Höhenprofil des Objektes 3 mit einem Bild ermittelt werden kann, das von einer ersten Bildaufnahmeeinheit 6 von dem Objekt 3 aufgenommen wird. Diese erste Bildaufnahmeeinheit 6 ist somit zur Erfassung der auf das Objekt 3 projizierten linienförmigen Markierung eingerichtet.

Weiterhin hat die optische Messeinrichtung 1 eine zweite Beleuchtungseinheit 7, die mit mindestens einem geeigneten Leuchtmittel zur Projektion von Licht in einem vorgegebenen Lichtspektrum auf das Objekt 3 ausgebildet ist. Dabei erfolgt die Beleuchtung des Objektes 3 und des darunter liegenden Transportbandes 2 nicht eingeschränkt auf eine Linie, sondern wie mit den Beleuchtungs-Projektionsstrahlen angedeutet, auf einer Flächenebene. Es ist eine zweite Bildaufnahmeeinheit 8 vorgesehen, die zur ortsabhängigen Erfassung des von dem Objekt 3 zurückreflektierten Lichts der zweiten Beleuchtungseinheit 7 ausgebildet ist.

Die erste und zweite Beleuchtungseinheit 4, 7 sowie die erste und zweite Bildaufnahmeeinheit 6, 8 werden durch eine geeignet programmierte Datenverarbeitungseinheit 9 angesteuert. Hierbei wird für das Lichtschnittverfahren die erste Beleuchtungseinheit 4 und die erste Bildaufnahmeeinheit 6 aktiviert, um die linienförmige Markierung auf das Objekt 3 zu projizieren und die dreidimensionale Oberflächeninformation des Objektes 3 zu erfassen.

Weiterhin wird gleichzeitig oder alternierend zum Lichtschnittverfahren durch Ansteuerung der zweiten Beleuchtungseinheit 7 und der zweiten Bildaufnahmeeinheit 8 Licht in mindestens einem vorgegebenen Stichspektrum auf das Objekt 3 flächig projiziert. Mit der zweiten Bildaufnahmeeinheit 8 wird nun mindestens ein Bild des Objektes 3, d.h. das von dem Objekt 3 zur zweiten Bildaufnahmeeinheit 8 zurückreflektierte Licht der zweiten Beleuchtungseinheit 7 in dem entsprechenden Lichtspektrum aufgenommen. Anhand dieser zurückreflektierten Lichtinformationen werden aus den aufgenommenen Bildern biometrische und/oder spektrale Eigenschaften des Objektes 3 ermittelt, um damit z.B. korrekt gefertigte Objekte 3 von nicht korrekt gefertigten Objekten 3 zu unterscheiden oder um die Objekte 3 qualitativ einzuordnen.

Die Eigenschaften werden dabei mit der zweiten Bildaufnahmeeinheit 8 ortsabhängig erfasst, wobei ein Bild die gesamte optisch erfassbare Fläche des Objektes 3 aufnehmen kann. Ein schrittweises Abscannen wie bei dem Lichtschnittverfahren ist hierfür nicht erforderlich.

Als spektrale Eigenschaft des Objektes 3 kann mit der zweiten Bildaufnahmeeinheit 8 und der Datenverarbeitungseinheit 9 im einfachsten Fall die unterschiedliche Intensität des zurückgestrahlten (z.B. sichtbaren) Lichtes von den unterschiedlichen Objektpunkten des Objektes 3 verstanden werden. In diesen einfachen Fällen wird die Frequenz des rückgestrahlten Lichtes nicht weiter bewertet.

In vielen Fällen bietet aber die Unterscheidung verschiedener Lichtfrequenzen die Möglichkeit, tiefergehende Qualitätsunterscheidungen zu machen. Hierbei können beispielsweise unerwünschte Verfärbungen der Objekte 3 erkannt werden. In diesen Fällen ist die Verwendung von farbigem Licht und/oder farbsensitiven, bildgebenden Sensoren, z.B. auf CCD- oder CMOS-Basis, geeignet. Statt Flächensensorik kann hier alternativ auch eine Erfassung in Streifen- bzw. Linienform erfolgen. Beispielsweise mit einem Matrix-Sensor, bei dem beliebige Auswerteregionen genutzt werden, oder mit einem Zeilensensor.

Auch der Lichtstreifen für die Volumenauswertung durch die erste Beleuchtungseinrichtung kann mit einem speziellen Spektrum erzeugt werden, sodass hierbei dann die Option entsteht, mit beiden Erfassungseinrichtungen nur eine Lichtlinie auszuwerten. Es können aber auch qualitätsmindernde Veränderungen der Oberfläche des Objektes 3 ermittelt werden, die weder geometrisch sind noch den sichtbaren Bereich des Lichtspektrums betreffen. So können für die Bereiche ultraviolettes (UV-), nahes infrarot (IR) und fernes infrarot (IR) Licht sensitive bildgebende Sensoren genutzt werden, die ein richtungsabhängiges orts- und spektralsensitives Bild liefern. Die richtungsabhängigen Informationen mehrerer bildgebender Sensoren der zweiten Bildaufnahmeeinheit 8 oder die Verbindung von richtungsabhängigen Bildinformationen mit Daten eines die Geometrie bestimmenden Sensors zu einer genauen 3D-Bestimmung der Objektpunkte des Objektes 3 und ihrer spektralen Merkmale können zur Erfassung mit der zweiten Bildaufnahmeeinheit genutzt werden. So kann die zweite Bildaufnahmeeinheit 8 ein oder bevorzugt mindestens zwei Sensoren haben.

Figur 2 zeigt eine Skizze der optischen Messeinrichtung 1. Zur Beschreibung der zweiten Beleuchtungseinheit 7 und der zweiten Bildaufnahmeeinheit 8 wird auf das Vorhergesagte verwiesen.

Erkennbar ist, dass die erste Beleuchtungseinheit 4 aus mehreren Lichtquellen gebildet ist. Mindestens zwei Lichtquellen sind dabei so ausgebildet, dass ihre Lichtstrahlen gebündelt auf die aus einem gemeinsamen Zielpunkt Z zusammenfallen. Diese Zielpunkte Z können beispielsweise in der Beleuchtungsebene liegen, d.h. in der Ebene der von der ersten Beleuchtungseinheit 4 projizierten linienförmigen Markierung 5. Denkbar ist aber auch wie dargestellt, dass der mindestens eine Zielpunkt Z in einem optischen Element 10 liegt, beispielsweise an der Schlitzblende, einem Bildprisma, einer Linsenoptik oder einer Schattenkante. Dieses optische Element 10 wird dabei genutzt, um die linienförmige Markierung 5 zu bilden.

Damit ist es möglich, die optische Messeinrichtung 1 ohne eine besondere Abschirmung gegen Fremdlicht einerseits und selbst emittiertes Licht andererseits einzusetzen und dennoch bei reduzierter Lichtleistung der Lichtquellen der ersten Beleuchtungseinheit 4 eine linienförmige Markierung 5 mit ausreichender Helligkeit bereitzustellen. Die optische Messeinrichtung 1 kann dabei ohne besondere Schutzvorkehrungen vor einem zu nahen Kontakt mit dem Menschen betrieben werden. Dies ist hilfreich z.B. wenn wenig Bauraum zur Verfügung steht oder eine Notwendigkeit häufiger Eingriffe in die jeweiligen Abläufe durch einen Menschen besteht. Die Lichtleistung der einzelnen Lichtquellen kann durch die Bündelung in einem Zielpunkt Z im Vergleich zur Nutzung jeweils einer Lichtquelle pro Zielpunkt Z reduziert werden. Die Augengefährdung beim Blick in die Lichtquellen der ersten Beleuchtungseinheit 4 wird hierdurch reduziert.

Deutlich wird, dass die erste Beleuchtungseinheit 4 und die erste Bildaufnahmeeinheit 6 ebenso wie die zweite Beleuchtungseinheit 7 und die zweite Bildaufnahmeeinheit 8 in bekannter, räumlicher Anordnung zueinander an einer gemeinsamen Basisstruktur angebracht sind. Die optische Messeinrichtung 1 ist auf diese Weise zu einem (kompakten) Sensor zusammengefasst und ermöglicht eine ortsaufgelöste Bildauswertung gegebenenfalls nach einer Kalibrierung.

Bei der Realisierung in Form eines Kompaktsensors mit einem oder mehreren zusätzlichen Farbbildsensoren können diese mit einer Triangulationsanordnung über eine Kalibrierung so in Verbindung miteinander gebracht werden, dass die über das Lichtschnittverfahren bestimmten 3D-Oberflächeninformationen mit zusätzlichen Informationen über die Farbe, Lichtintensität, Mustern und flächigen Farbtexturen versehen werden können.

Bei der Realisierung in Form eines Kompaktsensors unter Verwendung von mindestens einem spektral im infraroten oder ultravioletten Frequenzbereich empfindlichen Sensor können die Bildaufnahmeeinheiten 6, 8 mit einer Triangulationsanordnung über eine Bildregistrierung so in Verbindung miteinander gebracht werden, dass die über das Lichtschnittverfahren bestimmten 3D-Oberflächeninformationen mit zusätzlichen Informationen über die spektralen Rückstrahlungen verbunden werden.

Deutlich wird, dass die optische Messeinrichtung 1 geeignet ist, um die genauen 3D-Koordinaten der von der Lichtebene getroffenen, im Sichtbereich befindlichen Konturenpunkte zu messen, sodass jedem Konturenpunkt ein Merkmalsvektor von Intensitäten der emittierten Strahlung zugeordnet werden kann, die unterschiedlichen differenzierten Frequenzen entsprechen. Diese Lichtfrequenzen können dabei nacheinander oder gleichzeitig angeschaltet werden.

Mit der optischen Messeinrichtung 1 kann ein normales Farbgrauwertbild oder ein spektrales Bild des betreffenden Objektes 3 mit den 3D-Daten des Lichtschnittverfahrens verbunden werden. Hierzu ist die aus der ersten Beleuchtungseinheit 4 und der zweiten Bildaufnahmeeinheit 6 gebildete Lichtschnittanordnung über eine Art von zusätzlichen Farbbildsensor oder anderweitig spektral empfindlichen Sensor über eine Bildregistrierung so verkoppelt, dass jedem Profilpunkt ein spektraler Inhalt zugeordnet werden kann. Diese spektral spezifischen Oberflächeneigenschaften lassen in Verbindung mit den geometrischen Eigenschaften und Positionen wesentlich weitergehende Rückschlüsse auf Qualitätseigenschaften des Objektes 3 zu, welche die Inhaltsstoffe und/oder die nicht geometrischen Oberflächenveränderungen des Objektes 3 betreffen. Diese nicht geometrischen Effekte können im Rahmen einer Qualitätskontrolle gleichzeitig und positionsgenau auf dem betreffenden Körper des Objektes 3 bestimmt werden. Hierzu ist lediglich eine entsprechende Kalibrierung der optischen Messeinrichtung 1 als Ganzes notwendig. Der Durchstoß des Lichtstrahls durch die Oberfläche des gemessenen Objektes 3 liefert dann die genaue Position für die spezielle Lichtemission und damit für die zugeordnete Qualitätseigenschaft.

Die zusätzlichen, integrierten Sensoren können durch die Bildregistrierung bei gut strukturierten Objekten 3 auch geometrischen Informationen aus den Bereichen liefern, die im Sichtschatten der Lichtschnittebene liegen. Die Verwendung eines weiteren Lichtschnittsensors oder eines Lichtschnittsensors, bei dem auf beiden Seiten des Lichtvorhanges ein bildgebender Sensor sitzt, ist für die vorliegende optische Messeinrichtung 1 nicht erforderlich.

## Patentansprüche

1. Optische Messeinrichtung (1) zur Ermittlung von Eigenschaften eines Objektes (3) mit:
- einer ersten Beleuchtungseinheit (4), die zur Projektion einer linienförmigen Markierung (5) auf einer Beleuchtungsebene ausgebildet ist, und
- einer ersten Bildaufnahmeeinheit (6) zur Erfassung der auf das Objekt (3) projizierten linienförmigen Markierung (5),
- einem im Strahlengang zwischen den Lichtquellen der ersten Beleuchtungseinheit (4) und der Beleuchtungsebene angeordneten optischen Element (10),
wobei die erste Beleuchtungseinheit (4) mehrere Lichtquellen hat, die so ausgerichtet sind, dass Lichtstrahlen der mehreren Lichtquellen gebündelt auf gemeinsamen Zielpunkten (Z) in dem optischen Element (10) zusammenfallen.

2. Optische Messeinrichtung (1) nach Anspruch 1, **dadurch gekennzeichnet, dass** die erste Beleuchtungseinheit (4) mehrere Laserlichtquellen hat, deren Laserlichtstrahlen in der Beleuchtungsebene zusammengeführt sind.

3. Optische Messeinrichtung (1) nach einem der vorhergehenden Ansprüche, **dadurch gekennzeichnet, dass** im Strahlengang zwischen den Lichtquellen der ersten Beleuchtungseinheit (4) und der Beleuchtungsebene eine Schlitzblende, ein Prisma, eine Linsenoptik und/oder eine Schattenkante zur Bildung der linienförmigen Markierung (5) als optisches Element (10) angeordnet ist.

## Claims

1. Optical measuring device (1) for determining properties of an object (3) with:
- a first illumination unit (4) designed to project a line-shaped marking (5) on an illumination plane, and
- a first image pickup unit (6) for detecting the line-shaped marking (5) projected onto the object (3),
- an optical element (10) arranged in the beam path between the light sources of the first illumination unit (4) and the illumination plane,
wherein the first illumination unit (4) has a plurality of light sources aligned such that light rays from the plurality of light sources are collimated on common target points (Z) in the optical element (10).

2. Optical measuring device (1) according to claim 1, **characterized in that** the first illumination unit (4) has a plurality of laser light sources whose laser light beams are combined in the illumination plane.

3. Optical measuring device (1) according to one of the preceding claims, **characterized in that** a slit diaphragm, a prism, a lens optic and/or a shadow edge for forming the line-shaped marking (5) is arranged as an optical element (10) in the beam path between the light sources of the first illumination unit (4) and the illumination plane.

## Revendications

1. Dispositif de mesure optique (1) pour déterminer les propriétés d'un objet (3), comportant :
- une première unité d'éclairage (4) réalisée pour projeter un marquage en forme de ligne (5) sur un plan d'éclairage, et
- une première unité de capture d'image (6) pour détecter le marquage en forme de ligne (5) projetée sur l'objet (3),
- un élément optique (10) disposé dans le chemin optique entre les sources de lumière de la première unité d'éclairage (4) et le plan d'éclairage,
dans lequel
la première unité d'éclairage (4) comprend plusieurs sources de lumière qui sont orientées de telle sorte que les rayons lumineux provenant desdites plusieurs sources de lumière convergent en faisceau sur des points cibles communs (7) dans l'élément optique (10).

2. Dispositif de mesure optique (1) selon la revendication 1, **caractérisé en ce que** la première unité d'éclairage (4) comporte plusieurs sources de lumière laser dont les rayons lumineux laser sont réunis dans le plan d'éclairage.

3. Dispositif de mesure optique (1) selon l'une des revendications précédentes, **caractérisé en ce qu'**un diaphragme à fente, un prisme, une optique de lentille et/ou un bord d'ombre est disposé en tant qu'élément optique (10) dans le chemin optique entre les sources de lumière de la première unité d'éclairage (4) et le plan d'éclairage, afin de former le marquage en forme de ligne (5).
